# FASCICULE DE BREVET EUROPEEN

(11) **EP 3 418 123 B1**
(45) Date de publication et mention de la délivrance du brevet: **18.12.2019**
(21) Numéro de dépôt: 18174252.9
(22) Date de dépôt: 25.05.2018
(51) Int. Cl.: B60R 7/04, B60Q 9/00, B60R 7/06, B60Q 3/225

(54) **VÉHICULE PARTAGÉ COMPORTANT DES MOYENS ANTI-OUBLI D OBJET(S) DANS UN COMPARTIMENT DE RANGEMENT FERMÉ DUDIT VÉHICULE**
GEMEINSCHAFTLICH GENUTZTES FAHRZEUG, DAS MITTEL GEGEN DAS VERGESSEN VON GEGENSTÄNDEN IN EINEM VERSCHLOSSENEN ABLAGEFACH DIESES FAHRZEUGS UMFASST
SHARED VEHICLE COMPRISING MEANS TO PREVENT OBJECT(S) FROM BEING LEFT BEHIND IN A CLOSED STORAGE COMPARTMENT OF THE VEHICLE

(30) Priorité: 19.06.2017 FR 1755528
(43) Date de publication de la demande: 26.12.2018
(73) Titulaire: PSA Automobiles SA, 78300 Poissy (FR)
(72) Inventeur: DUBARRY, CHRISTOPHE, 91620 NOZAY (FR); CAMPANELLA, THIERRY, 91310 LINAS (FR); AUTHIER, PIERRE, 75005 PARIS 05 (FR); DELENNE, SANDRINE, 91120 PALAISEAU (FR); BONTEMPS, ALEXANDRA, 75017 PARIS 17 (FR); D'HALLIVILLEE, CAROLINE, 92410 VILLE d'AVRAY (FR)

(56) Documents cités:
- DE-A1-102015 114 531
- JP-A- H0 332 946
- JP-A- 2014 162 289
- US-B2- 9 216 695

## Description

La présente invention concerne les véhicules partagés et se rapporte plus particulièrement à un véhicule partagé comportant des moyens « anti-oubli » d'objet(s) dans un compartiment de rangement dudit véhicule.

On entend ici par véhicule partagé, un véhicule dont l'usage est réservé à plusieurs utilisateurs successifs.

De tels véhicules appartiennent par exemple à des fournisseurs de services de mobilité pour particuliers (location de véhicules) ou des sociétés ou organismes disposant d'une flotte de véhicules qui sont mis à disposition de leurs employés pour des déplacements d'ordre professionnel.

Un des problèmes récurrents rencontrés dans de tels véhicules qui voient passer un grand nombre d'usagers, est l'oubli d'objet(s) appartenant auxdits usagers dans des compartiments de rangement aménagés dans l'habitacle du véhicule, et notamment dans le poste de pilotage ou cockpit du véhicule.

Les compartiments de rangement habituellement présents dans un cockpit de véhicule sont les vide-poches, disposés généralement dans le bas des portières avant, les compartiments de rangement disposés dans la console centrale et surtout la boite-à-gants, disposée dans la planche de bord en regard du siège du passager avant.

Ces compartiments sont pour la plupart fermés par un cache ou un couvercle amovible suivant différents types de cinématiques, équipés d'un organe de commande d'ouverture/fermeture, ou bien ouverts mais sans bonne visibilité de leur contenu (le fond des vide-poches notamment).

D'autre part, le vide-poche, côté conducteur, n'est pas très visible quand le conducteur est assis sur son siège, détail qui a son importance comme décrit ci-après.

Il est connu dans l'art antérieur, en particulier du document EP1831054, un système de rangement avec un compartiment de rangement et un premier capteur pour détecter la présence d'un objet rangé dans le compartiment. Le système comprend en outre un deuxième capteur pour détecter si la porte du conducteur est ouverte ou fermée. Une alarme est déclenchée quand le premier détecteur a détecté la présence d'un objet dans le compartiment de rangement et quand la porte du conducteur est ouverte.

Un tel dispositif « anti-oubli » présente plusieurs inconvénients parmi lesquels le fait de nécessiter un capteur de détection à l'intérieur du compartiment. D'autre part, il nécessite l'ouverture de la portière pour le déclenchement de l'alarme et donc un détournement de la tête du conducteur vers la porte avant que l'alarme se déclenche.

Le document US9216695 divulgue un ensemble de siège de véhicule comprenant une partie de siège disposée adjacente à un dossier de siège ayant une surface avant, une surface de dossier, une surface intérieure et une surface extérieure.

Un but de la présente invention est de répondre aux inconvénients du document de l'art antérieur mentionné ci-dessus et en particulier, tout d'abord, de proposer un dispositif simple à mettre en œuvre et peu coûteux car ne nécessitant pas de capteur de détection d'objet.

Pour cela un premier aspect de l'invention concerne un véhicule partagé comprenant au moins un compartiment de rangement agencé dans le cockpit du véhicule et fermé par un couvercle, et un moyen de commande de l'arrêt du moteur du véhicule, caractérisé en ce qu'il comporte en outre des moyens d'éclairage extérieur du compartiment disposés dans le champ visuel périphérique du conducteur du véhicule, des moyens de détection aptes à générer une information d'état du moteur du véhicule et des moyens d'activation desdits moyens d'éclairage quand une information d'arrêt du moteur du véhicule délivrée par le moyen de commande est détectée par les moyens de détection, le couvercle est muni d'un organe de commande d'ouverture du compartiment de rangement ; les moyens d'éclairage étant disposés à proximité immédiate de l'organe de commande d'ouverture, les moyens d'éclairage comportent une source lumineuse et une pièce en matière diffusant la lumière et entourant l'organe de commande d'ouverture.

Selon une autre caractéristique, la source lumineuse est disposée à l'intérieur du couvercle et transmet la lumière à la pièce diffusant la lumière.

Selon une autre caractéristique, le compartiment de rangement est une boite à gants disposée dans la planche de bord du véhicule.

Selon une autre caractéristique, dans le cas où le véhicule comporte une console centrale, le compartiment de rangement est disposé dans la console centrale.

Le véhicule partagé tel que décrit ci-dessus, peut être un véhicule automobile ou un quadricycle.

Selon un second aspect, la présente invention concerne un procédé anti-oubli d'objet(s) dans un compartiment de rangement fermé d'un véhicule partagé tel que décrit ci-dessus, caractérisé en ce qu'il comprend les étapes consistant à :
- détecter la commande d'arrêt du moteur du véhicule ; et
- commander des moyens d'éclairage extérieur du compartiment de rangement à la suite de la détection d'une information d'arrêt du moteur pour attirer l'attention visuelle du conducteur vers le compartiment de rangement.

L'approche de la présente invention est basée sur le fait d'attirer visuellement l'attention du conducteur au moment où ce dernier va quitter le véhicule : il retire la clé de contact ou appuie sur un moyen d'arrêt du moteur du véhicule, généralement constitué d'un bouton poussoir marche/arrêt (Push), et ce avant l'ouverture de la porte.

Cette approche de type « pense-bête » est répétée systématiquement à chaque fois qu'un conducteur retire la clé de contact ou appuie sur le bouton marche/arrêt.

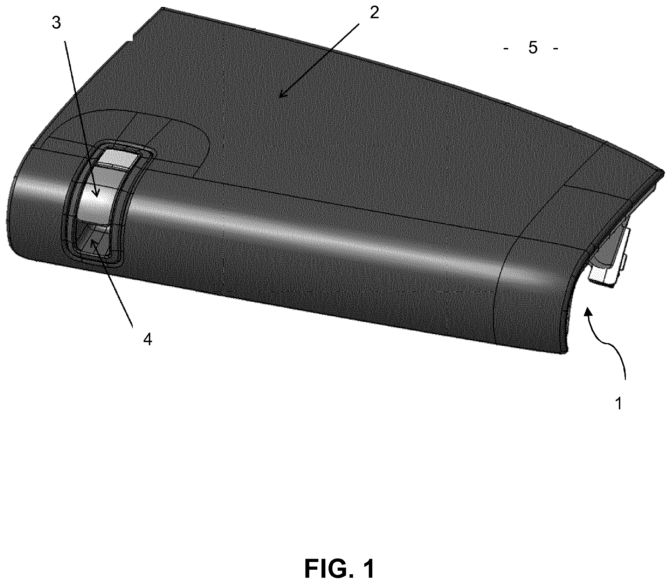

D'autres caractéristiques et avantages de la présente invention apparaîtront plus clairement à la lecture de la description détaillée qui suit d'un mode de réalisation de l'invention donné à titre d'exemples nullement limitatif et illustré par le dessin annexé, dans lequel la figure unique représente un couvercle de boite à gants équipé d'un organe de commande de l'ouverture de la boite à gants et de moyens d'éclairage disposés à proximité immédiate de l'organe de commande d'ouverture.

La boite à gants 1 est intégrée dans le poste de pilotage ou cockpit du véhicule, par exemple, dans la planche de bord 5 du véhicule (non représenté) de sorte que le couvercle 2 et son organe de commande d'ouverture 3 soient visibles (dans le champ visuel périphérique du conducteur) et accessibles par le conducteur.

La boite à gants 1 est généralement disposée à droite du conducteur (pour un véhicule à conduite à gauche) en face du siège du passager avant, et la clé de contact est disposée sur la droite de la colonne de direction soit entre la colonne direction et la boite à gants 1.

Le bouton marche/arrêt est disposé sur la console centrale ou sur la planche de bord toujours à la droite du conducteur, entre le conducteur et la boite à gants 1.

Le couvercle 2 comporte des moyens d'éclairage 40 comportant une pièce de décor appelée également enjoliveur 4 qui est réalisée dans une matière diffusant la lumière.

L'enjoliveur 4 est disposé sur le couvercle 2 et donc sur la partie extérieure de la boite à gants 1 de manière à diffuser la lumière dans le champ visuel périphérique du conducteur. L'enjoliveur 4 est avantageusement disposé autour de l'organe de commande d'ouverture 3 pour que, une fois éclairé, il souligne l'organe de commande d'ouverture 3 incitant ainsi le conducteur à ouvrir la boite à gants 1 pour vérifier qu'il n'a rien laissé à l'intérieur de celle-ci.

Les moyens d'éclairage 40 comportent en outre une source lumineuse non représentée) qui est agencée à l'intérieur du couvercle 2 sans aucun impact sur la cinématique d'ouverture et de fermeture du couvercle 2 qui garde toutes ses fonctionnalités.

Ainsi, quand le conducteur coupe le contact (arrêt du moteur) son attention est automatiquement attirée par l'éclairage du couvercle 2 de la boite à gants 1.

Le câblage de la source lumineuse passe à l'intérieur du couvercle 2 et reste donc invisible. La source est connectée via ce câblage à un boitier électronique de traitement et de pilotage (non représenté) situé, par exemple, sous la planche de bord 5.

A titre de variante, la source lumineuse est avantageusement la même que celle utilisée pour l'éclairage intérieur de la boite à gants 1. Un simple guide de lumière est agencé entre la source lumineuse et l'enjoliveur diffuseur de lumière 4. Pour limiter la longueur du guide de lumière, la source lumineuse est avantageusement disposée à proximité de l'organe de commande d'ouverture 3.

La coupure du contact (arrêt du moteur), déclenchée par le retrait de la clé, ou l'appui sur le bouton marche/arrêt, génère une information qui est retransmise sur le réseau de multiplexage du véhicule.

Cette information est générée par des moyens de détection et acquise par le boitier de traitement et de pilotage comportant des moyens d'activation de la source lumineuse.

La source lumineuse peut être activée en faisant varier son intensité, sa couleur et sa fréquence ce qui permet d'attirer de manière plus insistante, le regard du conducteur sur la boite à gants 1 et provoquer la vérification de son contenu pour éviter tout oubli d'affaires personnelles en fin de réservation/utilisation du véhicule partagé.

On comprendra que diverses modifications et/ou améliorations évidentes pour l'homme du métier peuvent être apportées au mode de réalisation de l'invention décrit dans la présente description sans sortir du cadre de l'invention défini par les revendications annexées.

Ainsi, le compartiment de rangement 1 peut être disposé en dehors de la planche de bord notamment dans la console centrale, ou entre la console centrale et la planche de bord, ou tout autre emplacement de l'habitacle se trouvant dans le champ de vision visuel périphérique du conducteur au moment où ce dernier retire la clé de la colonne de direction ou bien appuie sur le bouton marche/arrêt.

L'invention s'applique à tout type de véhicule comportant un cockpit et au moins un compartiment de rangement fermé par une couvercle tel qu'un véhicule automobile, quadricycle, etc.

## Revendications

1. Véhicule partagé comprenant au moins un compartiment de rangement (1) agencé dans le cockpit du véhicule et fermé par un couvercle (2), et un moyen de commande de l'arrêt du moteur du véhicule, le véhicule comportant en outre des moyens d'éclairage extérieur (40) du compartiment (1) disposés dans le champ visuel périphérique du conducteur du véhicule, des moyens de détection aptes à générer une information d'état du moteur du véhicule et des moyens d'activation desdits moyens d'éclairage (40) quand une information d'arrêt du moteur du véhicule délivrée par le moyen de commande est détectée par les moyens de détection,
dans lequel le couvercle (2) est muni d'un organe (3) de commande d'ouverture du compartiment de rangement (1) ; les moyens d'éclairage (40) étant disposés à proximité immédiate de l'organe de commande d'ouverture (3),
et dans lequel les moyens d'éclairage (40) comportent une source lumineuse et une pièce (4) en matière diffusant la lumière et entourant l'organe de commande d'ouverture (3).

2. Véhicule partagé selon la revendication précédente, **caractérisé en ce que** la source lumineuse est disposée à l'intérieur du couvercle (2) et transmet la lumière à la pièce (4) diffusant la lumière.

3. Véhicule partagé selon l'une des revendications précédentes, **caractérisé en ce que** le compartiment de rangement (1) est une boite à gants disposée dans la planche de bord (5) du véhicule.

4. Véhicule partagé selon l'une des revendications précédentes, ledit véhicule comportant une console centrale, **caractérisé en ce que** le compartiment de rangement (1) est disposé dans la console centrale.

5. Véhicule partagé selon l'une des revendications précédentes, **caractérisé en ce que** le véhicule est un véhicule automobile.

6. Véhicule partagé selon l'une des revendications 1 à 5, **caractérisé en ce que** le véhicule est un quadricycle.

7. Procédé anti-oubli d'objet(s) dans un compartiment de rangement fermé (1) d'un véhicule partagé selon l'une des revendications précédentes, **caractérisé en ce qu'**il comprend les étapes consistant à :
- détecter la commande d'arrêt du moteur du véhicule ; et
- commander des moyens d'éclairage extérieur (40) du compartiment de rangement (1) à la suite de la détection d'une information d'arrêt du moteur pour attirer l'attention visuelle du conducteur vers le compartiment de rangement (1).

## Patentansprüche

1. Gemeinschaftlich genutztes Fahrzeug, das mindestens ein Ablagefach (1) umfasst, das in dem Cockpit des Fahrzeugs eingerichtet ist und durch einen Deckel (2) verschlossen ist, und ein Mittel zum Stoppen des Motors des Fahrzeugs, wobei das Fahrzeug außerdem externe Beleuchtungsmittel (40) des Fachs (1) umfasst, die in dem umfänglichen Blickfeld des Fahrers des Fahrzeugs angeordnet sind, Mittel zum Erfassen, die geeignet sind, eine Zustandsinformation des Motors des Fahrzeugs zu erzeugen, und Mittel zum Aktivieren der Beleuchtungsmittel (40), wenn eine Stoppinformation des Motors des Fahrzeugs, die von dem Steuermittel geliefert wird, von den Erfassungsmitteln erfasst wird,
wobei der Deckel (2) mit einem Steuerorgan (3) zum Öffnen des Ablagefachs (1) versehen ist; wobei die Beleuchtungsmittel (40) in unmittelbarer Nähe des Öffnungssteuerorgans (3) angeordnet sind,
und wobei die Beleuchtungsmittel (40) eine Lichtquelle und ein Teil (4) aus Licht verbreitendem Material, und die das Öffnungssteuerorgan (3) umgeben, umfassen.

2. Gemeinschaftlich genutztes Fahrzeug nach dem vorstehenden Anspruch, **dadurch gekennzeichnet, dass** die Lichtquelle in dem Inneren des Deckels (2) angeordnet ist und das Licht zu dem Teil (4), das das Licht verbreitet, überträgt.

3. Gemeinschaftlich genutztes Fahrzeug nach einem der vorstehenden Ansprüche, **dadurch gekennzeichnet, dass** das Ablagefach (1) ein Handschuhfach, das in dem Armaturenbrett (5) des Fahrzeugs angeordnet ist, ist.

4. Gemeinschaftlich genutztes Fahrzeug nach einem der vorstehenden Ansprüche, wobei das Fahrzeug eine zentrale Konsole umfasst, **dadurch gekennzeichnet, dass** das Ablagefach (1) in der zentralen Konsole angeordnet ist.

5. Gemeinschaftlich genutztes Fahrzeug nach einem der vorstehenden Ansprüche, **dadurch gekennzeichnet, dass** das Fahrzeug ein Kraftfahrzeug ist.

6. Gemeinschaftlich genutztes Fahrzeug nach einem der Ansprüche 1 bis 5, **dadurch gekennzeichnet, dass** das Fahrzeug ein Vierrad ist.

7. Verfahren zum Schutz vor Vergessen eines Objekts (von Objekten) in einem verschlossenen Ablagefach (1) eines gemeinsam genutzten Fahrzeugs nach einem der vorstehenden Ansprüche, **dadurch gekennzeichnet, dass** es Schritte umfasst, die aus Folgendem bestehen:
- Erfassen des Steuerbefehls des Motors des Fahrzeugs; und
- Steuern der externen Beleuchtungsmittel (40) des Ablagefachs (1) im Anschluss an das Erfassen einer Stoppinformation des Motors, um die visuelle Aufmerksamkeit des Fahrers zu dem Ablagefach (1) zu lenken.

## Claims

1. A shared vehicle including at least one storage compartment (1) arranged in the cockpit of the vehicle and closed by a cover (2), and a means for controlling the stopping of the engine of the vehicle, the vehicle comprising, furthermore, exterior lighting means (40) of the compartment (1) arranged in the peripheral visual field of the driver of the vehicle, detection means able to generate information concerning the status of the engine of the vehicle and means for activation of said lighting means (40) when information of stopping of the engine of the vehicle delivered by the control means is detected by the detection means,
in which the cover (2) is provided with a control member (3) for opening the storage compartment (1); the lighting means (40) being arranged in the immediate proximity of the opening control member (3), and in which the lighting means (40) comprise a light source and a part (4) made of light-diffusing material and surrounding the opening control member (3).

2. The shared vehicle according to the preceding claim, **characterized in that** the light source is arranged in the interior of the cover (2) and transmits the light to the light-diffusing part (4).

3. The shared vehicle according to one of the preceding claims, **characterized in that** the storage compartment (1) is a glove compartment arranged in the dashboard (5) of the vehicle.

4. The shared vehicle according to one of the preceding claims, said vehicle comprising a central console, **characterized in that** the storage compartment (1) is arranged in the central console.

5. The shared vehicle according to one of the preceding claims, **characterized in that** the vehicle is a motor vehicle.

6. The shared vehicle according to one of Claims 1 to 5, **characterized in that** the vehicle is a quadricycle.

7. A method to prevent (an) object (s) from being left behind in a closed storage compartment (1) of a shared vehicle according to one of the preceding claims, **characterized in that** it includes the steps consisting of:
- detecting the stop command of the engine of the vehicle; and
- controlling exterior lighting means (40) of the storage compartment (1) following the detection of information of stopping of the engine to draw the driver's visual attention towards the storage compartment (1).
